# EUROPEAN PATENT APPLICATION

(11) **EP 4 703 995 A1**
(43) Date of publication of application: **04.03.2026**
(21) Application number: 25191575.7
(22) Date of filing: 24.07.2025
(51) Int. Cl.: G06Q 10/067, G05B 19/418

(54) **SUPPORT SYSTEM, SUPPORT METHOD, AND PROGRAM**

(30) Priority: 30.08.2024 JP 2024148263
(71) Applicant: Toyo Engineering Corporation, Chiba-shi, Chiba 261-8601 (JP)
(72) Inventor: SASAKI, Keigo, Chiba, 261-8601 (JP); MORIOKA, Emiko, Japan, 261-8601 (JP)
(74) Representative: Reich, Jochen

(57) **Abstract**

Multiple measurement data items corresponding to measurement values collected by sensors is each assigned a first tag unique to the sensor collecting the measurement data item. External information is assigned a second tag corresponding to the first tag assigned to a related measurement data item. The measurement data items include an evaluation target measurement data item assigned the first tag matching an evaluation target tag. The external information includes evaluation target external information assigned the second tag corresponding to the first tag matching the evaluation target tag. The support system includes a processor configured to generate a prompt including the evaluation target measurement data item, the evaluation target external information, and an instruction to generate the advice based on that data item and that information, acquire an answer including the advice from a large language model by inputting the prompt into the model, and generate the report using the answer.

## Description

### BACKGROUND

### 1. Field

The present disclosure relates to a support system, a support method, and a program.

### 2. Description of Related Art

In processing systems provided in facilities such as chemical plants and factory manufacturing lines, sensors are installed on various devices and on piping or the like that connects these devices to monitor the operating status of each processing system. For example, JP2024-36041A discloses a technique of determining whether a measurement data item from each sensor represents an abnormal value and notifying the administrator responsible for the processing system of the determination result, thereby supporting management of the operating status of the processing system.

A technique has been proposed to automatically output advice for supporting the operation of a processing system to the administrator responsible for the processing system in accordance with measurement data items. In an example of such a technique, first, a rule is preset to associate a value of a measurement data item with template data representing advice using, for example, a template or a symbol. Based on the rule, the advice that conforms to the template data according to the value of an actual measurement data item may be output. In such a configuration, only the advice that conforms to preset template data is output. Thus, outputting flexible advice is impossible.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A support system according to an aspect of the present disclosure generates a report for supporting operation of a processing system including sensors via a large language model. Each of multiple measurement data items corresponding to measurement values collected by the sensors is assigned a first tag unique to the sensor that collects the measurement data item. Information related to a related measurement data item that is a measurement data item of the multiple measurement data items is external information. The external information is used for the large language model to output advice for supporting the operation of the processing system in accordance with a value of the related measurement data item. The external information is assigned a second tag that corresponds to the first tag assigned to the related measurement data item. The multiple measurement data items include an evaluation target measurement data item assigned the first tag matching an evaluation target tag. The external information includes evaluation target external information assigned the second tag corresponding to the first tag that matches the evaluation target tag. The support system includes a processor configured to generate a prompt including the evaluation target measurement data item, the evaluation target external information, and an instruction to generate the advice based on the evaluation target measurement data item and the evaluation target external information, acquire an answer including the advice from the large language model by inputting the prompt into the large language model, and generate the report using the answer.

A support method according to another aspect of the present disclosure generates, using a processor included in a support system, a report for supporting operation of a processing system including sensors via a large language model. Each of multiple measurement data items corresponding to measurement values collected by the sensors is assigned a first tag unique to the sensor that collects the measurement data item. Information related to a related measurement data item that is a measurement data item of the multiple measurement data items is external information. The external information is used for the large language model to output advice for supporting the operation of the processing system in accordance with a value of the related measurement data item. The external information is assigned a second tag that corresponds to the first tag assigned to the related measurement data item. The multiple measurement data items include an evaluation target measurement data item assigned the first tag matching an evaluation target tag. The external information includes evaluation target external information assigned the second tag corresponding to the first tag that matches the evaluation target tag. The support method includes generating, by the processor, a prompt including the evaluation target measurement data item, the evaluation target external information, and an instruction to generate the advice based on the evaluation target measurement data item and the evaluation target external information, acquiring, by the processor, an answer including the advice from the large language model by inputting the prompt into the large language model, and generating, by the processor, the report using the answer.

A program according to another aspect of the present disclosure is executed by a processor included in the support system. The program causes the processor to execute the above-described support method.

Other features and aspects will be apparent from the following detailed description, the drawings, and the claims.

### BRIEF DESCRIPTION OF THE DRAWINGS

Fig. 1 is a schematic diagram illustrating an overall configuration of a support system.
Fig. 2 is a schematic diagram illustrating a hardware configuration of the support server included in the support system of Fig. 1.
Fig. 3 is a block diagram illustrating the configuration of the support server shown in Fig. 2.
Fig. 4 is a flowchart illustrating a report generation process executed by the support server of Fig. 2.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

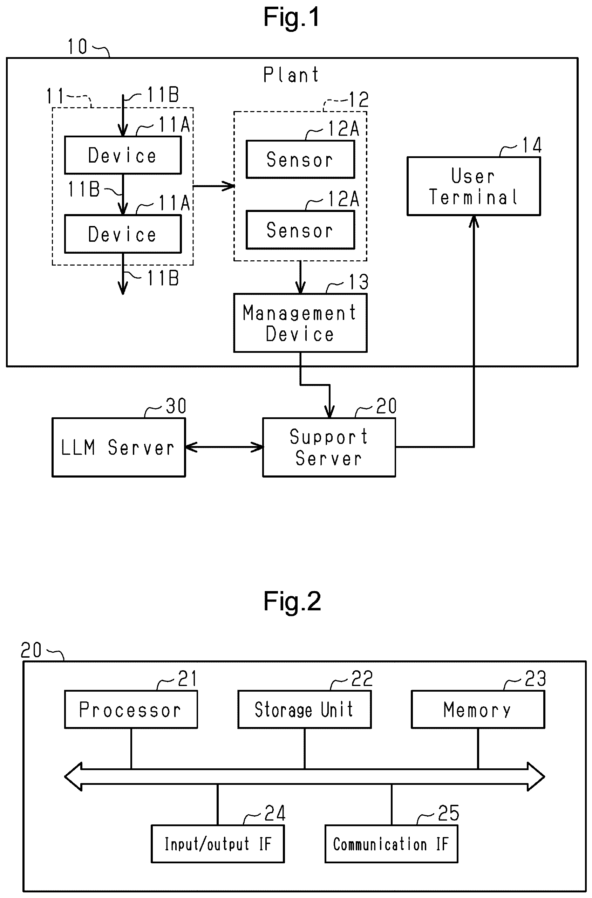

An embodiment of a support system, a support method, and a program will now be described with reference to Figs. 1 to 4. The support system of the present embodiment is a computer system that notifies the administrator responsible for a processing system of advice for supporting the operation of the processing system. The processing system is installed in, for example, a chemical plant or a factory manufacturing line.

### Overall Configuration

As shown in Fig. 1, the support system of the present embodiment includes a support server 20. The support server 20 outputs a report for notifying the administrator responsible for a processing system 11 included in a plant 10 of advice for supporting the operation of the processing system 11. The support server 20 uses a large language model (LLM) included in a LLM server 30 to generate a report.

The plant 10 may be any facility including the processing system 11, such as a chemical plant or a factory manufacturing line.

The processing system 11 is at least a portion of the plant 10. For example, the processing system 11 has a configuration in which devices 11A are connected to each other by pipes 11B. Each device 11A is, for example, a processing device that executes some processes on a processing target or another device 11A. Examples of the device 11A include a tank that temporarily stores, for example, a processing target or other raw materials. Examples of the device 11A also include, but are not limited to, at least one of a pump, a compressor, a turbine, a heat exchanger, a distillation column, a reaction vessel, a dryer, a heating furnace, a fan, and a valve. The device 11A includes a control terminal that controls processes. Examples of the control terminal include, but are not limited to, at least one of an electromagnetic valve (solenoid valve), a positioner, a motor of a motor pump, and a relay switch that is connected to an opening/closing control device that controls the operation of an electric heater.

The plant 10 includes a sensor group 12 provided in the processing system 11. The sensor group 12 includes components including sensors 12A that monitor the operating status of the processing system 11. The sensors 12A each detect a physical quantity indicating the state of a facility such as the corresponding device 11A or pipe 11B. The sensor 12A is preferably provided in each of the devices 11A and each of the pipes 11B, but may be provided in any measurement target of the devices 11A and the pipes 11B. Examples of the sensor 12A include, but are not limited to, a flow meter, a level gauge, a thermometer, a pressure gauge, a vibration sensor, an analyzer, an ammeter, a voltmeter, a speedometer, or a sensor that detects a valve opening degree. The sensor 12A may be any device configured to measure a physical quantity.

The plant 10 includes a management device 13. The management device 13 is, for example, a data server. Instead, the management device 13 may be, for example, a computer terminal used by an administrator or the like responsible for the plant 10. The management device 13 stores a measurement data item collected by each sensor 12A of the sensor group 12. The management device 13 accumulates the measurement data items from the past to the present by repeatedly storing the measurement data item corresponding to the measurement value collected by each sensor 12A at predetermined time intervals.

For example, the management device 13 may store, as a measurement data item, the measurement value collected by each sensor 12A. For example, the management device 13 may store, as a measurement data item, a value obtained by executing a calculation process on the measurement value collected by each sensor 12A. For example, a measurement data item may be a value representing the ratio of the measurement value to a design value (theoretical value) of the physical quantity measured by the sensor 12A. For example, a measurement data item may be a value calculated using two or more measurement values, such as a pressure difference indicating the difference between measurement values collected by two pressure gauges.

The measurement data item stored in the management device 13 is assigned a first tag unique to the sensor 12A that collects the measurement data item. The first tag is a character string composed of, for example, letters, numbers, symbols, or a combination thereof. That is, each measurement data item is assigned, as the first tag, a character string unique to the sensor 12A that collects the measurement data item. For example, the same first tag is assigned to multiple measurement data items collected by the same sensor 12A at different points in time. In addition, each measurement data item is assigned a time stamp from which the measurement date and time is identifiable.

The first tag includes, for example, information enabling identification of the plant 10 for which a measurement data item has been acquired, information enabling identification of the facility targeted for measurement, and information enabling identification of the sensor 12A that has acquired the measurement data item. The first tag may include, for example, information enabling identification of a physical quantity represented by the value of a measurement data item.

The plant 10 includes a user terminal 14. The user terminal 14 is, for example, a computer terminal managed by a user such as an employee of the corporate entity that manages the plant 10. A corporate entity is composed of a single company or a group of companies that are economically and organizationally linked. The user terminal 14 is, for example, a desktop or a laptop personal computer, but may also be a portable terminal such as a tablet or a smartphone compatible with a mobile communication system. An application program and a webpage browser for displaying the report transmitted from the support server 20 are installed in the user terminal 14. While Fig. 1 illustrates a configuration in which the user terminal 14 is disposed inside the plant 10, the user terminal 14 may be a computer terminal disposed outside the plant 10.

The support server 20 is, for example, managed by a corporate entity different from the corporate entity that manages the processing system 11, but may also be managed by the corporate entity that manages the processing system 11. The support server 20 is connected to each of the management device 13 of the plant 10, the user terminal 14 of the plant 10, and the LLM server 30 via a network line for mutual communication. The support server 20 collects a measurement data item from the management device 13 of the plant 10. The support server 20 causes the large language model included in the LLM server 30 to generate an answer including advice for supporting the operation of the processing system 11, the advice corresponding to the measurement data item. The support server 20 outputs, to the user terminal 14, a report using the answer acquired from the large language model. The report that is output by the support server 20 may be output to the user terminal 14 via, for example, another server.

The report generated by the support server 20 may be in the form of, for example, an electronic mail containing text data. In this case, the support server 20 transmits a report in the form of an electronic mail to a predetermined mail server. The user terminal 14 acquires a report in the form of an electronic mail from the mail server. The report generated by the support server 20 may be in the form of an image displayed by an application program or a webpage browser. The image may be a still image or a moving image.

The LLM server 30 is, for example, managed by a corporate entity different from the corporate entity that manages the support server 20, but may also be managed by the corporate entity that manages the support server 20. The large language model included in the LLM server 30 is trained on a large-scale text corpus. The large language model is used to perform natural language understanding tasks. The large language model functions to interpret a sentence given as a prompt and generate an appropriate response in that context.

### Hardware Configuration

An example of the hardware configuration of the support server 20 will now be described with reference to Fig. 2. The hardware configuration of the support server 20 is not limited to the following example and may be implemented differently. The management device 13 and the user terminal 14 may have the same configuration as the following hardware configuration.

As illustrated in Fig. 2, the support server 20 includes a processor 21, a storage unit 22, a memory 23, an input/output IF 24, and a communication IF 25.

The processor 21 is hardware for executing an instruction set described in a program. The processor 21 includes, for example, an arithmetic device, a register, and a peripheral circuit.

The storage unit 22 provides storage for data. The storage unit 22 is, for example, a flash memory or a hard disk drive (HDD). The memory 23 temporarily stores, for example, a program and data that are processed by the program. The memory 23 is, for example, a volatile memory such as a dynamic random-access memory (DRAM).

The input/output IF 24 is an interface that includes an input device that receives an operation input from the administrator responsible for the support server 20 and an output device that presents information to the administrator. The input device is, for example, a pointing device (e.g., a mouse) or a keyboard. The input device may be a microphone for voice input. The output device is, for example, a display panel such as a liquid crystal display panel or an organic EL panel. The input/output IF 24 may be, for example, a touch panel in which a display panel serving as a display that displays an image is combined with a touchpad serving as an input unit that receives a user's operation. The communication IF 25 is an interface that inputs and outputs a signal for communication with an external device.

### Processor 21

The processor 21 of the support server 20 executes a report generation process that outputs a report including advice for supporting the operation of the processing system 11 based on a measurement data item.

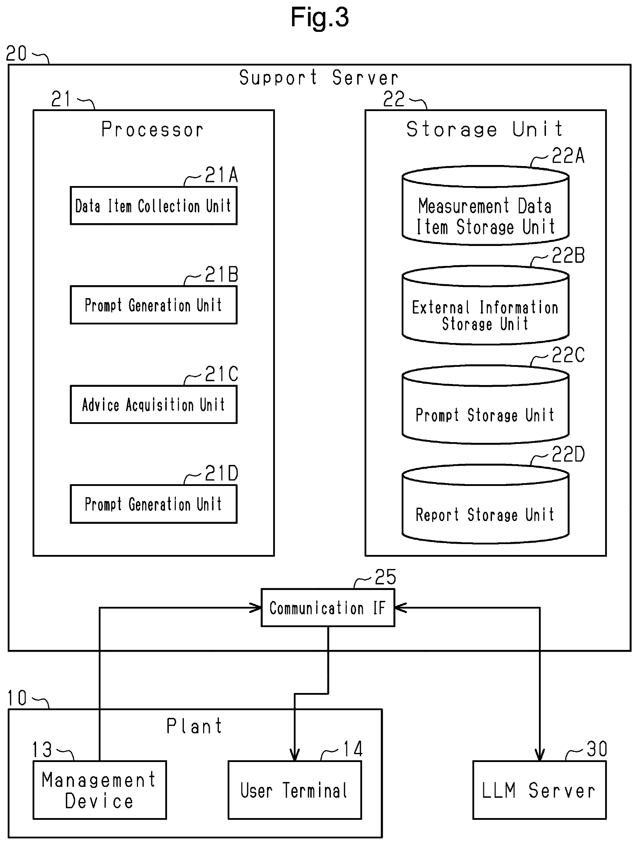

As illustrated in Fig. 3, the processor 21 executes a program for a report generation process to function as, for example, a data item collection unit 21A, a prompt generation unit 21B, an advice acquisition unit 21C, and a report generation unit 21D. The program for the report generation process is stored in the storage unit 22 of the support server 20.

The data item collection unit 21A executes a measurement data item collection process that collects a measurement data item from the management device 13 of the plant 10. The data item collection unit 21A stores, in the storage unit 22, the measurement data item collected from the management device 13. The process in which the data item collection unit 21A collects a measurement data item from the management device 13 is executed for each predetermined period (e.g., every few hours, every half a day, or every day). In this case, the data item collection unit 21A collects the measurement data item stored in the management device 13 during the period between the previous collection and the subsequent collection of the measurement data item from the management device 13. The process in which the data item collection unit 21A collects a measurement data item from the management device 13 may be a process that transmits a measurement data item from the management device 13 to the support server 20 for each predetermined period.

The prompt generation unit 21B executes a prompt generation process that generates a prompt to be input into the large language model of the LLM server 30. The prompt includes an evaluation target measurement data item, external information, and an instruction to generate advice for supporting the operation of the processing system 11 based on the evaluation target measurement data item and the external information.

The evaluation target measurement data item included in the prompt includes one or more measurement data items assigned a first tag that is defined as an evaluation target tag. The evaluation target tag is a first tag among multiple first tags, the first tag being assigned to a measurement data item for the large language model to evaluate or determine the operating status of the processing system 11 when the large language model generates advice for supporting the operation of the processing system 11. That is, the large language model evaluates or determines the operating status of the processing system 11 based on the measurement data item assigned the first tag matching the evaluation target tag, and then outputs the advice according to that operating status.

The prompt generation unit 21B may define only one first tag as the evaluation target tag, or may define different first tags as the evaluation target tag. For example, the prompt generation unit 21B may define a preset first tag as the evaluation target tag. Alternatively, the prompt generation unit 21B may first execute a process that determines whether a measurement data item indicates abnormal behavior, and then define, as the evaluation target tag, the first tag for the measurement data item determined to indicate abnormal behavior. In this case, for each first tag of the measurement data item, the storage unit 22 stores a determination condition (e.g., a threshold) for determining whether the measurement data item indicates abnormal behavior. The process that determines whether the measurement data item indicates abnormal behavior does not have to be executed by the prompt generation unit 21B, and may be executed by another computer system.

The prompt generation unit 21B may generate a prompt for each first tag matching the evaluation target tag. In this case, the prompt generation unit 21B may include, in one prompt, multiple measurement data items each assigned the same first tag matching the evaluation target tag and assigned a different time stamp. In other words, the evaluation target measurement data item may include multiple measurement data items, each assigned the same first tag matching the evaluation target tag and assigned a different time stamp. The prompt generation unit 21B may include, in one prompt, multiple measurement data items each assigned a different first tag matching the evaluation target tag. In other words, the evaluation target measurement data item may include multiple measurement data items, each assigned a different first tag matching the evaluation target tag. In addition to the evaluation target tag, the prompt generation unit 21B may include, in a prompt, a measurement data item assigned the first tag necessary for generating a report.

The external information included in a prompt is related to the evaluation target measurement data item, and includes information for the large language model to output advice for supporting the operation of the processing system 11 in accordance with a value of the evaluation target measurement data item. The evaluation target measurement data item is an example of a related measurement data item. The external information is, for example, text data written in any language, and may be, for example, image data including characters or symbols. Examples of the external information are as follows.

For example, the external information includes advice for instructing or suggesting an operation performed on the device 11A of the processing system 11 according to the value of a measurement data item. For example, the external information includes a threshold for a measurement data item, and includes advice related to an operation performed on the device 11A as a response taken when the measurement data item is greater than the threshold. For example, a first tag for a measurement data item indicating pressures at a valve is hereinafter denoted by V1. The external information is a text saying, for example, "increase the flow rate of the gas feed when the measurement data item assigned the first tag of V1 is less than X1 [barG]." In this case, the large language model outputs advice for instructing or suggesting an operation performed on the device 11A for increasing the flow rate of the gas feed when the actual measurement value of the measurement data item assigned the first tag of V1 is greater than the threshold included in the external information.

For example, the external information is an upper or lower limit value to be satisfied by a measurement data item, or is, for example, a numerical range defined by the upper and lower limit values. The external information is a text saying, for example, "keep the measurement data item assigned the first tag of V1 in a range of X1 [barG] or more and X2 [barG] or less." In this case, the large language model outputs advice for instructing or suggesting an operation performed on the device 11A for increasing or decreasing the actual measurement value of the measurement data item assigned the first tag of V1 when the value of the measurement data item is out of the numerical range included in the external information. As in the above-described example, the external information may include information from which the advice related to an operation performed on the device 11A is inferable from a measurement data item. That is, the external information does not necessarily have to include the advice related to an operation performed on the device 11A.

In addition, the advice for supporting the operation of the processing system 11 is not limited to the advice related to an operation performed on the device 11A, and may be, for example, advice for instructing or suggesting follow-up observation of the behavior reflected in a measurement data item or the state of the device 11A. In this case, the external information is a text saying, for example, "Caution is required when the measurement data item assigned the first tag of V1 is greater than or equal to X3 [barG]." In this case, the large language model outputs advice for instructing or suggesting to watch the behavior reflected in the measurement data item and an operation performed on the device 11A in the future when the actual measurement value of the measurement data item assigned the first tag of V1 is greater than the threshold included in the external information.

The external information may include a statistical value of previous measurement data items collected when the processing system 11 was normally operating. In this case, the statistical value is at least one selected from, for example, a mean, a median, a standard deviation, and a quartile. In this case, the large language model compares the actual measurement value of a measurement data item with the statistical value included in the external information, thereby outputting advice related to an operation performed on the device 11A of the processing system 11 in consideration of the degree of deviation of the actual measurement value of the measurement data item from the statistical value. The external information may include a design value (target value) of a measurement data item.

The external information may include reference information used to infer the state of the processing system 11 from a measurement data item. The reference information, for example, associates the value of a measurement data item with the state of the processing system 11. The reference information is, for example, a text saying, "When the measurement data item assigned the first tag of V1 is less than or equal to X4 [barG], the processing system 11 is not running." The reference information is, for example, a text saying, "When the measurement data item assigned the first tag of V1 is greater than or equal to X5 [barG], a specific process (e.g., an adsorbent regeneration process) is being performed." In the following description, for example, the first tag for a measurement data item representing the flow rate of fluid discharged from a pump is denoted by P1. The reference information is, for example, a text saying, "When the measurement data item assigned the first tag of P1 is greater than or equal to Y1 [t/h], the pump is operating." The reference information is, for example, a text saying, "When the pump is operating, the measurement data item assigned the first tag of P1 normally indicates a range of Y1 [t/h] or more and Y2 [t/h] or less."

The external information may include information related to a first tag. The information related to a first tag may include, for example, a unit of a measurement data item assigned that first tag. The information related to a first tag may include, for example, a description of the meaning of the physical quantity represented by a measurement data item assigned that first tag. The description of the meaning of the physical quantity represented by a measurement data item is a text saying, for example, "The measurement data item assigned the first tag of V1 represents pressures in a synthesis process."

The external information may include, for example, an existing document that describes how to operate a facility included in the processing system 11, such as an operation manual for the device 11A. The inclusion of the content of an existing document, such as the operation manual for the device 11A, in a prompt allows the information described in that document to be used for the large language model to generate advice.

The advice acquisition unit 21C executes an advice acquisition process. In the advice acquisition process, the advice acquisition unit 21C inputs the prompt generated by the prompt generation unit 21B into the large language model of the LLM server 30. Then, the advice acquisition unit 21C acquires an answer including advice for supporting the operation of the processing system 11 from the large language model. The answer output by the large language model is, for example, text data, but may be image data, audio data, or a combination thereof.

The report generation unit 21D generates a report including advice for supporting the operation of the processing system 11 using the answer acquired from the large language model. The report may be, for example, text data, image data, or audio data including at least part of the answer acquired from the large language model, or may be a combination thereof. Alternatively, the report may be, for example, data including at least part of the answer obtained by processing, using the large language model, the answer acquired from the large language model.

The report generation unit 21D may output an evaluation target measurement data item to a report together with the advice. The evaluation target measurement data item included in the report may be in a text format or in an any format such as a graph or a table. Together with the advice, the report generation unit 21D may include, in the report, various types of information included in the external information such as flowcharts and photographs of a facility related to the advice. Together with the advice, the report generation unit 21D may include, in the report, a result of determining whether the evaluation target measurement data item indicated abnormal behavior based on the external information.

The report generation unit 21G transmits the generated report to the user terminal 14. The report generation unit 21G may transmit the generated report to the user terminal 14 via, for instance, another server (e.g., an email server).

### Storage Unit 22

As shown in Fig. 3, the storage unit 22 includes a database including a measurement data item storage unit 22A, an external information storage unit 22B, a prompt storage unit 22C, and a report storage unit 22D.

The measurement data item storage unit 22A is an example of a first database that stores the measurement data item acquired by the data item collection unit 21A from the management device 13 of the plant 10. For example, the measurement data item storage unit 22A stores a measurement data item, the first tag assigned to the measurement data item, and a time stamp representing the date and time when the measurement data item was collected.

The external information storage unit 22B is an example of a second database that stores external information used to output advice for supporting the operation of the processing system 11 to the large language model in accordance with the value of a measurement data item. External information is assigned a second tag having a tag name that corresponds to the first tag assigned to a measurement data item related to that external information. The tag name of the first tag corresponding to the tag name of the second tag indicates that the second tag assigned to the external information related to a measurement data item is identifiable from the first tag assigned to the measurement data item. The tag name refers to a character string composed of each of the first tag and the second tag.

For example, external information related to a measurement data item assigned a specific first tag may be assigned a second tag composed of the same character string as the specific first tag. For example, external information related to a measurement data item assigned a specific first tag may be assigned a second tag including the same character string as part of the character string included in the first tag. In other words, the tag name of the first tag may be different from that of the second tag. In one example, when the first tag has a character string "AAA.BB," the second tag may be expressed as a character string "AAA-BB," so that the first tag and the second tag may be associated with each other using a character string positioned before and after "." and "-." In this case, whether the tag is the first or second tag is identifiable from whether the tag name includes "." or "-." In another example, when the first tag has a character string "AAABB-1," the second tag may be expressed as a character string "AAABB-2," so that the first tag and the second tag may be associated with each other using a character string positioned before "-." In this case, whether the tag is the first or second tag is identifiable from a character or a character string positioned after "-."

The external information storage unit 22B stores external information and a second tag assigned to the external information in association with each other. For example, the external information storage unit 22B preferably stores the external information related to a measurement data item assigned the first tag matching the evaluation target tag, thereby allowing the external information to be searched for by the tag name of the second tag assigned to the external information.

The prompt storage unit 22C stores templates of prompts to be input into the large language model. The prompt storage unit 22C stores text data necessary for the prompt generation unit 21B to generate a prompt. The prompt storage unit 22C may store prompts that have previously been generated by the prompt generation unit 21B.

The report storage unit 22D stores templates of the report generated by the report generation unit 21D. The report storage unit 22D stores text data necessary for the report generation unit 21D to generate a report. The report storage unit 22D may store reports that have previously been generated by the report generation unit 21D.

### Report Generation Process

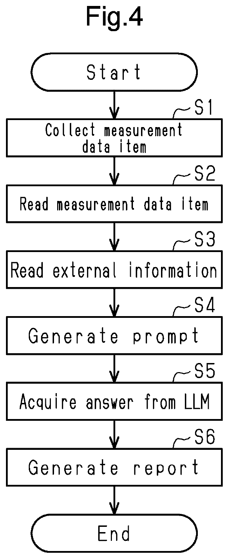

The report generation process will now be described with reference to Fig. 4. The following report generation process is repeatedly executed for each predetermined period.

As illustrated in Fig. 4, in the report generation process, first, the data item collection unit 21A collects the measurement data item stored in the management device 13 from the management device 13 of the plant 10 (step S1). The data item collection unit 21A acquires the measurement data item from the management device 13, and stores the acquired measurement data item in the measurement data item storage unit 22A. The process of step S1 may be executed separately from the report generation process at any time.

Next, the prompt generation unit 21B reads the measurement data item stored in the measurement data item storage unit 22A (step S2). Specifically, in step S2, the prompt generation unit 21B reads, from the measurement data item storage unit 22A, the evaluation target measurement data item assigned the first tag matching the evaluation target tag.

For example, in step S2, the prompt generation unit 21B may first execute a process that determines whether the measurement data item indicates abnormal behavior, and then define, as the evaluation target tag, the first tag for the measurement data item determined to indicate abnormal behavior. Alternatively, in step S2, the prompt generation unit 21B may define a preset first tag as the evaluation target tag. In step S2, the prompt generation unit 21B may define only one type of first tag as the evaluation target tag, or may define two or more types of first tags as the evaluation target tag.

For example, in step S2, the prompt generation unit 21B may acquire, from the measurement data item storage unit 22A, multiple measurement data items each assigned the same first tag matching the evaluation target tag and assigned a different time stamp. For example, in step S2, the prompt generation unit 21B may acquire, from the measurement data item storage unit 22A, multiple measurement data items each assigned a different first tag matching the evaluation target tag. In step S2, in addition to the measurement data item assigned the first tag matching the evaluation target tag, the prompt generation unit 21B may acquire the measurement data item assigned the first tag necessary for generating the report.

Then, the prompt generation unit 21B reads the external information stored in the external information storage unit 22B (step S3). Specifically, in step S3, the prompt generation unit 21B reads, from the external information storage unit 22B, the external information assigned the second tag that corresponds to the first tag matching the evaluation target tag. The prompt generation unit 21B acquires, from the external information storage unit 22B, the external information assigned the second tag corresponding to the tag name of the evaluation target tag defined in step S2. Hereinafter, the external information assigned the second tag that corresponds to the first tag matching the evaluation target tag is referred to as the evaluation target external information.

Subsequently, the prompt generation unit 21B generates a prompt that includes the evaluation target measurement data item, the evaluation target external information, and the instruction to generate the advice for supporting the operation of the processing system 11 based on the evaluation target measurement data item and the evaluation target external information (step S4). In step S4, the prompt generation unit 21B reads the template of the prompt including the instruction to generate the advice from the prompt storage unit 22C, and inserts the evaluation target measurement data item and the evaluation target external information into a predetermined position of the template to generate the prompt.

Subsequently, the advice acquisition unit 21C inputs the prompt generated by the prompt generation unit 21B into the large language model of the LLM server 30, thereby acquiring an answer including the advice for supporting the operation of the processing system 11 from the large language model (step S5).

The advice for supporting the operation of the processing system 11 may include content for instructing or suggesting an operation performed on the device 11A of the processing system 11 according to the value of the evaluation target measurement data item. The advice for supporting the operation of the processing system 11 may also include, for example, content for instructing or suggesting follow-up observation of the behavior reflected in a measurement data item assigned the first tag matching the evaluation target tag or the state of the device 11A.

More preferably, the advice for supporting the operation of the processing system 11 is based on temporal changes in measurement data items each assigned the same first tag matching the evaluation target tag and assigned a different time stamp. In this case, in step S4, the instruction to be input into the prompt may be issued to generate advice that is based on temporal changes in measurement data items each assigned a different time stamp.

For example, it is assumed that measurement data items each assigned the same first tag matching the evaluation target tag and assigned a different time stamp are input into the prompt as the evaluation target measurement data item. For example, if the behavior reflected in the measurement data items is out of a suitable range defined in the external information but indicates a tendency to approach the suitable range with passage of time, the measurement data items may fall within the suitable range with further passage of time. In such a case, since the measurement data items are out of the suitable range but tend to recover, advice for suggesting to observe the behavior reflected in the measurement data item in the future may be obtained as the advice from the large language model. If the behavior reflected in measurement data items is out of the suitable range and shows no sign of recovery, advice for instructing or suggesting an operation performed on the device 11A for causing the measurement data items to fall within the suitable range may be obtained as the advice from the large language model.

Subsequently, the report generation unit 21D generates a report including the advice for supporting the operation of the processing system 11, using the answer including the advice acquired from the large language model (step S6). For example, in step S6, the report generation unit 21D generates a report by reading the template of the report from the report storage unit 22D and inserting, into a predetermined position of the template, at least part of the answer acquired from the large language model. Then, the report generation unit 21D transmits the generated report to the user terminal 14. Through the above-described processes, the report generation process is completed.

### Advantages of Embodiment

(1) In the present embodiment, a prompt including an evaluation target measurement data item and external information is input into a large language model, so that the large language model outputs advice corresponding to the evaluation target measurement data item based on the external information. In such a manner, the evaluation target measurement data item is input into the large language model together with the external information. This allows flexible advice corresponding to the evaluation target measurement data item to be obtained from the large language model without strictly setting a rule that associates advice with the value of the evaluation target measurement data item.
(2) The external information simply needs to include information for the large language model to output advice for supporting the operation of the processing system 11 in accordance with the value of the evaluation target measurement data item. This eliminates the need to write the external information in, for example, a programming language, allowing it to be written in any language. Accordingly, the creation and editing of the external information are facilitated. Further, for example, a document used by the administrator responsible for the processing system 11 to manage the processing system 11 may also be used as the external information. The external information storage unit 22B preferably stores the external information in which the content of an existing document has been converted into text data. This facilitates the creation and editing of a prompt and facilitates the editing of the content of an existing document stored as the external information.
(3) In a case in which a prompt includes measurement data items each assigned the same first tag matching the evaluation target tag and assigned a different time stamp, advice is output based on temporal changes in the measurement data items. If the advice based on the temporal changes in the measurement data items is output without using the large language model, a rule would need to be preset so as to associate patterns of the temporal changes in an expected measurement data item with the advice that is based on each pattern. In this case, the larger the number of target measurement data items, the larger number of patterns of expected temporal changes in the measurement data items. This makes the settings of the rule complicated. The present support system is configured to output flexible advice based on the temporal changes in measurement data items, without strictly presetting a rule that associates the patterns of the temporal changes in the measurement data items with the advice based on the pattern of the temporal changes.
(4) The prompt generation unit 21B is configured to execute a process that generates a report using the measurement data item stored in the measurement data item storage unit 22A and the external information stored in the external information storage unit 22B.
(5) The external information storage unit 22B stores external information related to a measurement data item such that the external information can be searched for by the correspondence relationship between at least part of the tag name of the first tag assigned to the measurement data item and at least part of the tag name of the second tag assigned to the external information. For example, if external information is identified using semantic search that is based on the first tag for a measurement data item, a database or the like would be required to store a search text corresponding to the first tag for the measurement data item. In the present support system, external information is assigned a second tag in advance. Thus, the external information assigned the second tag that corresponding to the first tag matching the evaluation target tag is identifiable as the evaluation target external information based on the tag name of the second tag. Thus, as compared to when, from the external information stored in the external information storage unit 22B, external information related to a measurement data item assigned the first tag matching the evaluation target tag is identified using semantic search that is based on the tag name of the measurement data item, the system configuration is simplified.

### Modifications

The present embodiment may be modified as follows. The present embodiment and the following modifications can be combined if the combined modifications remain technically consistent with each other.

The measurement data item included in a prompt may be one or more measurement data items assigned the first tag matching the evaluation target tag. The measurement data item included in a prompt may be an evaluation target statistical value, which is a statistical value of measurement data items each assigned the same first tag matching the evaluation target tag and assigned a different time stamp. For example, the evaluation target statistical value indicates any one of a minimum value, a maximum value, a median, a mode, and a mean of measurement data items each assigned the same first tag matching the evaluation target tag and assigned a different time stamp.

In the support system, the measurement data item storage unit 22A included in the storage unit 22 of the support server 20 may be omitted. In this case, the prompt generation unit 21B may be configured to acquire a measurement data item from the management device 13 each time the prompt generation unit 21B executes the report generation process.

In the support system, the external information storage unit 22B included in the storage unit 22 of the support server 20 may be omitted. In this case, external information may be stored in another device. Alternatively, external information may be described in the code of a program executed by the processor 21. In this case, when the processor 21 executes the program, the external information is developed in the memory 23.

The support system may be implemented as a single device or may be distributed across multiple devices or subsystems that run together to execute programs. In the support system, the support server 20 and other devices may be implemented as a single device. In the support system, at least part of the configuration of the support server 20 may be executed by a cloud server. For example, at least part of the units exemplified as the database included in the storage unit 22 of the support server 20 may be replaced with a database on a cloud server.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A support system that generates a report for supporting operation of a processing system (11) including sensors (12A) via a large language model, wherein
each of multiple measurement data items corresponding to measurement values collected by the sensors (12A) is assigned a first tag unique to the sensor (12A) that collects the measurement data item,
information related to a related measurement data item that is a measurement data item of the multiple measurement data items is external information, wherein the external information is used for the large language model to output advice for supporting the operation of the processing system (11) in accordance with a value of the related measurement data item,
the external information is assigned a second tag that corresponds to the first tag assigned to the related measurement data item,
the multiple measurement data items include an evaluation target measurement data item assigned the first tag matching an evaluation target tag,
the external information includes evaluation target external information assigned the second tag corresponding to the first tag that matches the evaluation target tag, and
the support system comprises a processor (21) configured to:
generate a prompt including the evaluation target measurement data item, the evaluation target external information, and an instruction to generate the advice based on the evaluation target measurement data item and the evaluation target external information;
acquire an answer including the advice from the large language model by inputting the prompt into the large language model; and
generate the report using the answer.

2. The support system according to claim 1, wherein
the evaluation target measurement data item includes multiple measurement data items each assigned the same first tag matching the evaluation target tag and assigned a different time stamp.

3. The support system according to claim 1 or 2, further comprising:
a first database (21A) that stores the measurement data item and the first tag in association with each other; and
a second database (22B) that stores the external information and the second tag in association with each other.

4. The support system according to any one of claims 1 to 3, wherein the evaluation target tag is a first tag among multiple first tags, the first tag being assigned to a measurement data item for the large language model to evaluate or determine an operating status of the processing system (11) when the large language model generates the advice for supporting the operation of the processing system (11).

5. A support method for generating, using a processor (21) included in a support system, a report for supporting operation of a processing system (11) including sensors (12A) via a large language model, wherein
each of multiple measurement data items corresponding to measurement values collected by the sensors (12A) is assigned a first tag unique to the sensor (12A) that collects the measurement data item,
information related to a related measurement data item that is a measurement data item of the multiple measurement data items is external information, wherein the external information is used for the large language model to output advice for supporting the operation of the processing system (11) in accordance with a value of the related measurement data item,
the external information is assigned a second tag that corresponds to the first tag assigned to the related measurement data item,
the multiple measurement data items include an evaluation target measurement data item assigned the first tag matching an evaluation target tag,
the external information includes evaluation target external information assigned the second tag corresponding to the first tag that matches the evaluation target tag, and
the support method comprises:
generating, by the processor (21), a prompt including the evaluation target measurement data item, the evaluation target external information, and an instruction to generate the advice based on the evaluation target measurement data item and the evaluation target external information;
acquiring, by the processor (21), an answer including the advice from the large language model by inputting the prompt into the large language model; and
generating, by the processor (21), the report using the answer.

6. A program executed by a processor (21) included in a support system, the program causing the processor (21) to execute the support method according to claim 5.
